# EUROPÄISCHE PATENTSCHRIFT

(11) **EP 3 590 017 B1**
(45) Veröffentlichungstag und Bekanntmachung des Hinweises auf die Patenterteilung: **04.10.2023**
(21) Anmeldenummer: 18702491.4
(22) Anmeldetag: 31.01.2018
(51) Int. Cl.: G05D 7/01

(54) **DURCHFLUSSMENGENREGLER**
FLOW RATE CONTROLLER
RÉGULATEUR DE DÉBIT

(30) Priorität: 03.03.2017 DE 202017101236 U
(43) Veröffentlichungstag der Anmeldung: 08.01.2020
(60) Teilanmeldung: 20152580.5
(73) Patentinhaber: Neoperl GmbH, 79379 Müllheim (DE)
(72) Erfinder: HART, Keith, Welland Worcestershire WR13 6NE (GB)
(74) Vertreter: Mertzlufft-Paufler, Cornelius
(86) Internationale Anmeldenummer: PCT/EP2018/052326
(87) Internationale Veröffentlichungsnummer: WO 2018/158023

(56) Entgegenhaltungen:
- EP-A1- 2 226 697
- US-A- 3 847 178
- US-A1- 2014 014 216
- US-A1- 2015 129 684

## Beschreibung

Die Erfindung betrifft einen Durchflussmengenregler mit einem deformierbaren, vorzugsweise ringförmigen, Regelkörper, der in eine korrespondierende Nut eingelegt ist, wobei an wenigstens einer Nutseitenwand ein Regelprofil ausgebildet ist, wobei das Regelprofil aus einer Abfolge von Regelvorsprüngen und Regelausnehmungen gebildet ist und der Regelkörper und das Regelprofil zwischen sich einen Regelspalt derart begrenzen, dass eine Formveränderung des Regelkörpers eine Änderung einer Größe des Regelspaltes bewirkt, wobei benachbarte Regelvorsprünge in einem Abstand voneinander angeordnet sind, so dass entlang des Umfangs eine Abfolge von Abständen zwischen jeweils benachbarten Regelvorsprüngen gebildet ist.

Die US 3 847 178 A betrifft einen Durchflussmengenregler mit einem deformierbaren Regelkörper, der in eine Nut eingelegt ist, wobei an einer Nutseitenwand ein Regelprofil ausgebildet ist. Das Regelprofil setzt sich aus einer Abfolge von Regelvorsprüngen zusammen, die in regelmäßigen Abständen zueinander angeordnet sind.

Die EP 2 226 697 Al betrifft einen Durchflussmengenregler mit einem ringförmigen Drosselkörper aus einem elastischen Material, der zwischen sich und einem Regelstern einen sich unter Druck des durchströmenden Fluids verändernden Steuerspalt begrenzt.

Die US 2014/0014216 A1 betrifft einen Durchflussmengenregler, mit einer Struktur zur Geräuschminderung. Hierbei sind eine Vielzahl an Vorsprüngen zwischen einer Basis und der Struktur zur Geräuschminderung ausgebildet.

Zur Lösung der genannten Aufgabe sind erfindungsgemäß die Merkmale von Anspruch 1 vorgesehen. Insbesondere wird somit erfindungsgemäß zur Lösung der genannten Aufgabe bei einem Durchflussmengenregler der eingangs beschriebenen Art vorgeschlagen, dass wenigstens drei Abstände in der Abfolge von Abständen voneinander verschieden groß gewählt sind. Somit ist ein Regelverhalten in unterschiedlichen Druckbereichen separat einstellbar. Die Erfindung hat erkannt, dass ein Bereich oder Teil des Regelkörpers, der einen vergleichsweise großen Abstand zwischen benachbarten Regelvorsprüngen überspannt, im Wesentlichen das Regelverhalten, also die Abhängigkeit des Durchflussmengenstroms vom Druck, bei kleinen Druckdifferenzen über dem Durchflussmengenregler bestimmt. Dies kann dadurch erklärt werden, dass ein Teil oder Bereich des Regelkörpers, der an weit voneinander beabstandeten Stellen abgestützt ist, schon durch vergleichsweise geringe Drücke deformiert wird. Ein Teil oder Bereich des Regelkörpers, der einen vergleichsweise engen oder geringen Abstand zwischen benachbarten Regelvorsprüngen überspannt und somit an eng beieinanderliegenden Regelvorsprüngen abgestützt ist, ist dagegen erst bei hohen Drücken deformierbar. Ein solcher Teil oder Bereich definiert somit im Wesentlichen das Regelverhalten bei hohen Drücken. Es sind somit Regelkurven erreichbar, die von kleinen Drücken vergleichsweise schnell auf ein Plateau oder einen gewünschten Wert des Durchflussmengenstroms ansteigen, so dass ein Arbeitsbereich, in dem beispielsweise eine gewünschte Durchflussmenge pro Zeiteinheit druckunabhängig realisiert ist.

Bevorzugt ist der Regelkörper als O-Ring ausgebildet.

Bei einer Ausgestaltung der Erfindung kann vorgesehen sein, dass die Regelvorsprünge in Umfangsrichtung ungleichmäßig verteilt sind. Somit ist ein Regelverhalten in einem fein untergliederten Druckbereich je nach Anforderung gestaltbar.

Bei der Ausgestaltung der Erfindung ist vorgesehen, dass ein Abstand der wenigstens drei Abstände mehr als doppelt so groß wie ein anderer Abstand der wenigstens drei Abstände ist. Somit ist ein Regelverhalten in weit voneinander entfernt liegenden Druckbereichen unterschiedlich festlegbar. Vorzugsweise ist der Abstand wenigstens mehr als drei- oder viermal so groß wie der andere Abstand. Es ist somit ein besonders breit gespreizter Arbeitsbereich für das Regelverhalten bildbar.

Bei der Ausgestaltung der Erfindung ist vorgesehen, dass die Regelvorsprünge eine einheitliche Höhe aufweisen, mit der sie jeweils von der wenigstens einen Nutseitenwand in den Regelspalt abragen. Es ist somit ein gewünschtes Regelverhalten einfach reproduzierbar definierbar.

Bei einer Ausgestaltung der Erfindung kann vorgesehen sein, dass die Regelvorsprünge radial nach außen orientiert sind. Somit ist der Regelspalt radial innen an dem Regelkörper ausbildbar.

Die Begriffe "radial", "axial", "Umfangsrichtung" können hierbei und im Folgenden beispielsweise in Bezug auf eine Längsachse oder Längsrichtung und/oder in Bezug auf eine runde Form, beispielsweise des Regelkörpers oder des Durchflussmengenregler, definiert sein.

Alternativ oder zusätzlich kann bei einer Ausgestaltung der Erfindung vorgesehen sein, dass die Regelvorsprünge radial innerhalb des Regelkörpers angeordnet sind. Somit umgibt der Regelkörper die beispielsweise an einem Regelkern ausgebildeten Regelvorsprünge außenseitig. Der Regelkern kann hierbei zentrisch angeordnet sein.

Bei einer Ausgestaltung der Erfindung kann vorgesehen sein, dass die Regelvorsprünge radial nach innen orientiert angeordnet sind. Somit ist der Regelspalt radial außen an dem Regelkörper ausbildbar.

Alternativ oder zusätzlich kann bei einer Ausgestaltung der Erfindung vorgesehen sein, dass die Regelvorsprünge radial außerhalb des Regelkörpers angeordnet sind. Somit ist ein ringförmiger Regelkern oder ein ringförmiges Regelprofil verwendbar.

Es kann auch vorgesehen sein, dass ein Teil der Regelvorsprünge radial nach außen und ein weiterer Teil der Regelvorsprünge radial nach innen orientiert ist. Somit sind zwei Regelspalte bildbar, die radial innerhalb beziehungsweise radial außerhalb des Regelkörpers angeordnet sind.

Bei einer Ausgestaltung der Erfindung kann vorgesehen sein, dass wenigstens zwei Regelvorsprünge in Umfangsrichtung unterschiedliche Breiten aufweisen. Somit ist ein Auflagebereich, mit welchem der Regelkörper auf dem Regelvorsprung liegt, individuell wählbar, um ein gewünschtes Regelverhalten erreichen zu können.

Bei einer Ausgestaltung der Erfindung kann vorgesehen sein, dass eine, beispielsweise die bereits erwähnte, Höhe, mit der die Regelvorsprünge von der wenigstens einen Nutseitenwand in den Regelspalt abragen, zumindest für einen Teil der Regelvorsprünge verstellbar ist. Somit ist ein Regelverhalten auch nachträglich veränderbar, beispielsweise um eine gewünschtes Plateau einzustellen und/oder zu verändern. Beispielsweise ist die Höhe für alle Regelvorsprünge individuell verstellbar. Dies ermöglicht eine besonders feingliedrige Einstellung einer Form der Regelkurve. Alternativ kann vorgesehen sein, dass die Regelvorsprünge in Gruppen oder gemeinsam verstellbar sind. Dies ermöglicht eine besonders einfache Verstellbarkeit, beispielsweise zur Erstellung eines Plateaus der Regelkurve. Hierbei kann vorgesehen sein, dass die Verstellbarkeit die Höhe der Regelprofile und/oder ihren Abstand zueinander betrifft. Es kann auch eine Kopplung vorgesehen sein, um die Regelprofile gleichzeitig in Höhe und Abstand zu variieren. Dies kann beispielsweise durch Ausbildung eines Regelprofils an einem verstellbaren Konus oder dergleichen verjüngendem Teil eingerichtet sein.

Bei einer Ausgestaltung der Erfindung kann vorgesehen sein, dass wenigstens ein Regelvorsprung einen Zwischenvorsprung bildet, der in seiner Höhe gegenüber einer Höhe der benachbarten Regelvorsprünge, beispielsweise der bereits erwähnten Höhe, vermindert ist. Es hat sich herausgestellt, dass vergleichsweise kleine Zwischenvorsprünge besonders dort, wo ein großer Abstand zwischen benachbarten Regelvorsprüngen besteht, zu einer Geräuschreduktion im Betrieb beitragen, vorzugsweise ohne eine wesentliche Veränderung des Regelverhaltens. Die Verwendung von vergleichsweise breiten Zwischenvorsprüngen erhöht die Variabilität bei einer Definition einer gewünschten Regelkurve oder eines gewünschten Regelverhaltens.

Bevorzugt sind die Zwischenvorsprünge fest und nicht verstellbar ausgebildet.

Die Erfindung wird nun anhand von Ausführungsbeispielen näher beschrieben.

Es zeigt:
- Fig. 1: einen Durchflussmengenregler nach dem Stand der Technik in Explosionsdarstellung,
- Fig. 2: eine Ansicht auf die Zulaufseite des Durchflussmengenreglers nach Fig. 1, wobei der Regelkörper entfernt ist,
- Fig. 3: die Ansicht gemäß Fig. 2 mit eingesetztem Regelkörper,
- Fig. 4: einen weiteren Durchflussmengenregler nach dem Stand der Technik in Explosionsdarstellung,
- Fig. 5: eine Ansicht auf die Zulaufseite des Durchflussmengenreglers nach Fig. 4, wobei der Regelkörper entfernt ist,
- Fig. 6: die Ansicht gemäß Fig. 5 mit eingesetztem Regelkörper,
- Fig. 7: einen Durchflussmengenregler in Explosionsdarstellung,
- Fig. 8: eine Ansicht auf die Zulaufseite des Durchflussmengenreglers nach Fig. 7, wobei der Regelkörper entfernt ist,
- Fig. 9: die Ansicht gemäß Fig. 8 mit eingesetztem Regelkörper,
- Fig. 10: einen weiteren Durchflussmengenregler, wobei der Regelkörper entfernt ist,
- Fig. 11: den Durchflussmengenregler gemäß Fig. 10 mit eingesetztem Regelkörper,
- Fig. 12: einen erfindungsgemäßen Durchflussmengenregler, wobei der Regelkörper entfernt ist,
- Fig. 13: den Durchflussmengenregler gemäß Fig. 12 mit eingesetztem Regelkörper,
- Fig. 14: einen weiteren Durchflussmengenregler, wobei der Regelkörper entfernt ist,
- Fig. 15: den Durchflussmengenregler gemäß Fig. 14 mit eingesetztem Regelkörper,
- Fig. 16: einen weiteren Durchflussmengenregler, wobei der Regelkörper entfernt ist,
- Fig. 17: den Durchflussmengenregler gemäß Fig. 16 mit eingesetztem Regelkörper,
- Fig. 18: einen weiteren erfindungsgemäßen Durchflussmengenregler, wobei der Regelkörper entfernt ist,
- Fig. 19: den Durchflussmengenregler gemäß Fig. 18 mit eingesetztem Regelkörper,
- Fig. 20: einen weiteren Durchflussmengenregler, wobei der Regelkörper entfernt ist,
- Fig. 21: den Durchflussmengenregler gemäß Fig. 20 mit eingesetztem Regelkörper und
- Fig. 22: einen weiteren Durchflussmengenregler mit unterschiedlichen Höhen der Regelvorsprünge.

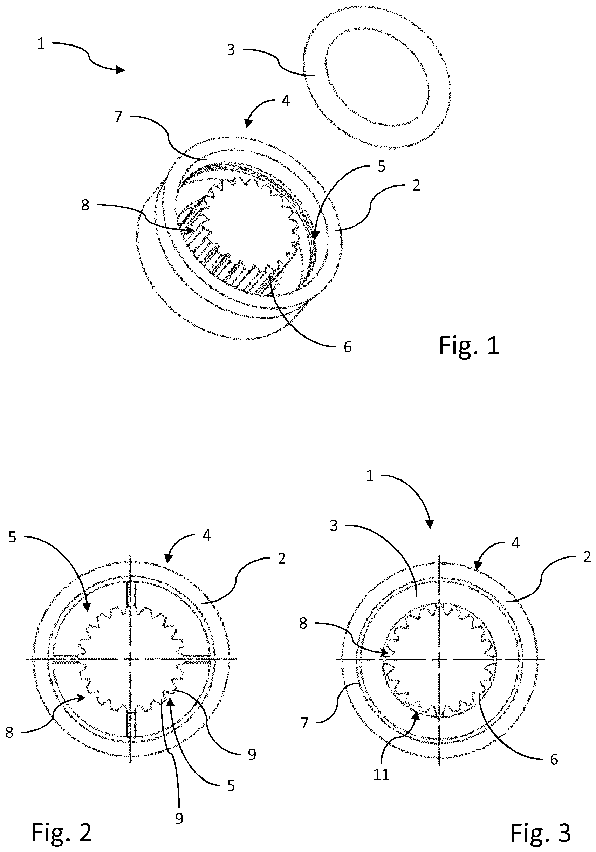

Die Figuren 1 bis 3 zeigen unterschiedliche Ansichten eines im Ganzen mit 1 bezeichneten Durchflussmengenreglers nach dem Stand der Technik. Der Durchflussmengenregler 1 ist zum Einsetzen in einen Armaturenauslauf oder einen Rohrabschnitt oder dergleichen ausgebildet.

Der Durchflussmengenregler 1 hat ein Gehäuse 2, in das ein Regelkörper 3 von einer Zulaufseite 4 her einsetzbar ist.

Hierzu bildet das Gehäuse 2 eine ringförmige Nut 5, die zur Zulaufseite 4 hin offen ist und die den ringförmigen Regelkörper 3 aufnimmt.

Die Nut 5 wird radial nach innen und radial nach außen von jeweils einer Nutseitenwand 6, 7 begrenzt.

An der radial inneren Nutseitenwand 6 ist ein Regelprofil 8 ausgebildet.

Das Regelprofil 8 bildet eine Abfolge 12 von radial nach außen von der Nutseitenwand 6 in die Nut 5 abragenden Regelvorsprüngen 9. Die Regelvorsprünge 9 sind alle identisch ausgebildet. Die Abstände 10 zwischen benachbarten Regelvorsprüngen 9 sind übereinstimmend gewählt, so dass die Regelvorsprünge 9 entlang eines Umfangs gleichverteilt sind.

Im Betrieb ist zwischen dem Regelkörper 3 und dem Regelprofil 8 ein Regelspalt 11 gebildet. Je nach an der Zulaufseite 4 anliegendem Druck wird der Querschnitt des Regelkörpers 3 verformt, so dass sich der Regelspalt 11 druckanhängig verengt. Hierbei bilden die Regelvorsprünge 9 Auflagepunkte für den Regelkörper 3, zwischen denen die Formänderung des Regelkörpers 3 im Wesentlichen stattfindet. Somit sind die Bereiche des Regelkörpers 3 zwischen zwei benachbarten Regelvorsprüngen 9 zueinander parallel geschaltet. Jeder dieser Bereiche wirkt in gleicher Weise. Der Regelkörper 3 ist aus einem elastischen Material, beispielsweise aus Gummi, gefertigt.

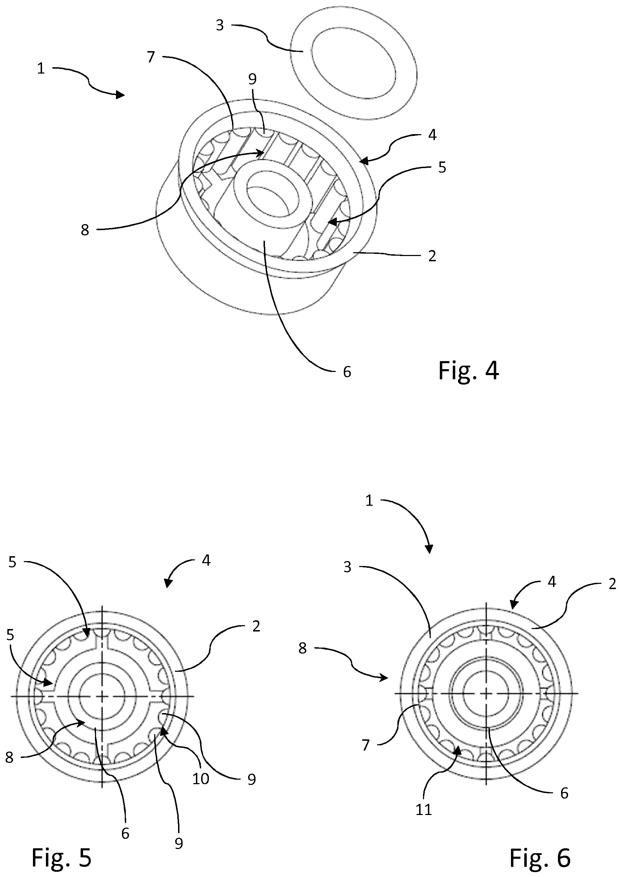

Die Figuren 4 bis 6 zeigen unterschiedliche Ansichten eines weiteren Durchflussmengenreglers 1 nach dem Stand der Technik und werden gemeinsam beschrieben. Funktionell und/oder konstruktiv zu dem vorangehenden Durchflussmengenregler gemäß Figur 1 bis 3 gleichartige oder identische Bauteile und Funktionseinheiten sind mit denselben Bezugszeichen bezeichnet und nicht gesondert beschrieben. Vielmehr gelten die Ausführungen zu den Figuren 1 bis 3 zu den Figuren 4 bis 6 entsprechend.

Im Unterschied zu der Variante nach Figuren 1 bis 3 ist bei dem Durchflussmengenregler 1 nach Figuren 4 bis 6 das Regelprofil 8 an der äußeren Nutseitenwand 7 ausgebildet, so dass die Regelvorsprünge 9 nach radial nach innen abragen.

Der Regelspalt 11 ist somit radial außerhalb des Regelkörpers 3 ausgebildet und umgibt diesen entlang des Umfangs.

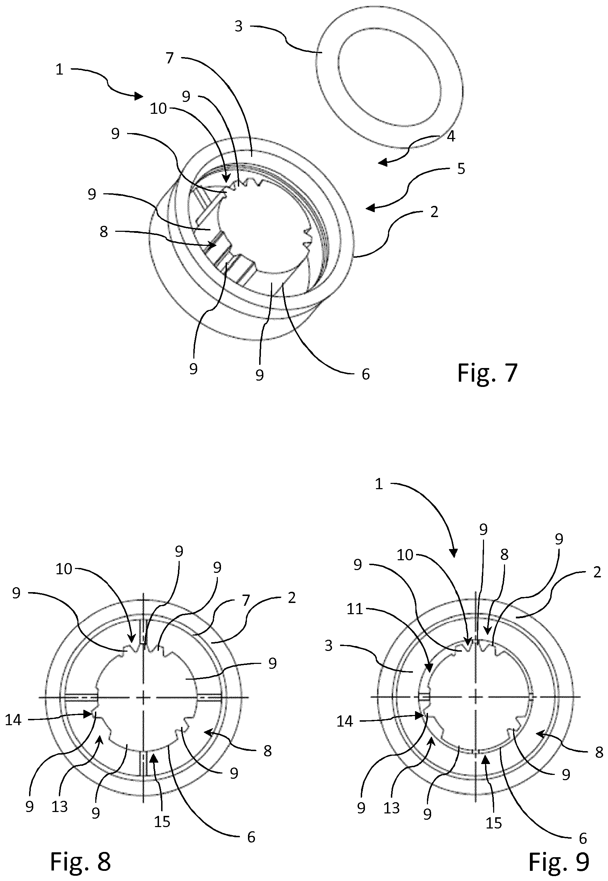

Die Figuren 7 bis 9 zeigen unterschiedliche Ansichten eines Durchflussmengenreglers 1 und werden gemeinsam beschrieben. Funktionell und/oder konstruktiv zu dem vorangehenden Durchflussmengenregler gemäß Figur 1 bis 6 gleichartige oder identische Bauteile und Funktionseinheiten sind mit denselben Bezugszeichen bezeichnet und nicht gesondert beschrieben. Vielmehr gelten die Ausführungen zu den Figuren 1 bis 6 zu den Figuren 7 bis 9 entsprechend.

Das Ausführungsbeispiel nach den Figuren 7 bis 9 unterscheidet sich von dem Stand der Technik nach den Figuren 1 bis 6 dadurch, dass die Abfolge 12 von Abständen 10, 13 wenigstens zwei Abstände 10, 13 hat, die voneinander verschieden bemessen sind.

So ist der Abstand 13 zwischen zwei benachbarten Regelvorsprüngen 9 größer als der Abstand 10. Im Bereich des Abstands 13 stellt der Regelkörper 3 daher das Regelverhalten bei niedrigen Drücken ein, im Bereich des Abstands 10 dagegen das Regelverhalten bei hohen Drücken.

Insgesamt zeigt das Regelprofil 8 entlang der Umfangsrichtung, also hier entlang des Verlaufs der Nut 5, eine ungleichmäßige Verteilung von Regelvorsprüngen.

Der Abstand 13 misst hierbei ein Vielfaches des Abstands 10.

Die Regelvorsprünge 9 weisen hierbei eine einheitliche Höhe über der (gedachten, zylindermantelförmigen) Nutseitenwand 6 auf und ragen radial nach außen, so dass der Regelspalt 11 radial innerhalb des Regelkörpers 3 ausgebildet ist.

Der Regelspalt 11 bildet hierbei eine axial orientierte Durchtrittöffnung für Wasser.

Aus der Figur 8 ist deutlich ersichtlich, dass die Regelvorsprünge 9 mit unterschiedlichen Konturen ausgebildet sind und unterschiedliche Breiten 14, 15 aufweisen.

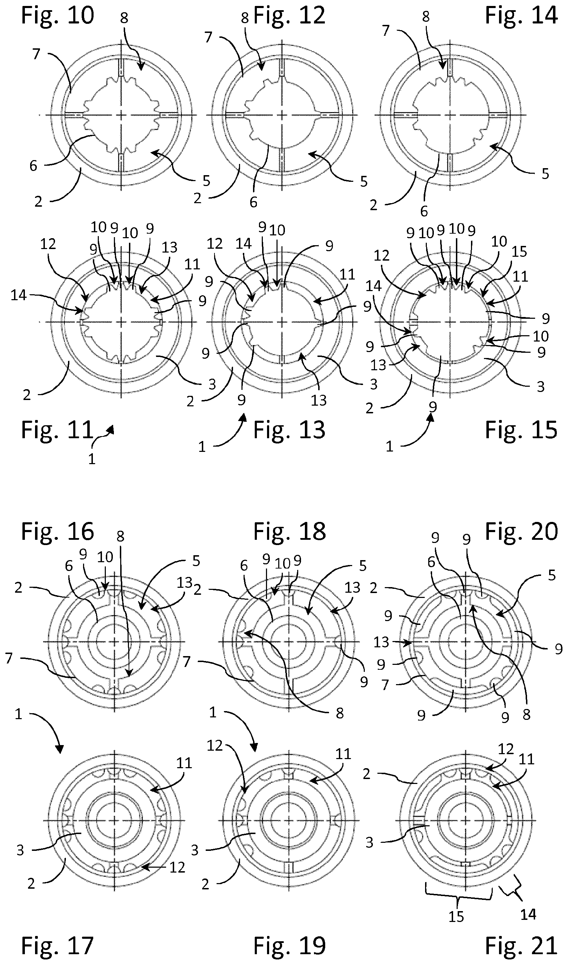

Die Figuren 10 und 11 zeigen unterschiedliche Ansichten eines Durchflussmengenreglers 1 und werden gemeinsam beschrieben. Funktionell und/oder konstruktiv zu dem vorangehenden Durchflussmengenregler gemäß Figur 1 bis 9 gleichartige oder identische Bauteile und Funktionseinheiten sind mit denselben Bezugszeichen bezeichnet und nicht gesondert beschrieben. Vielmehr gelten die Ausführungen zu den Figuren 1 bis 9 zu den Figuren 10 und 11 entsprechend.

Das Ausführungsbeispiel nach den Figuren 10 und 11 unterscheidet sich von dem Ausführungsbeispiel nach den Figuren 7 bis 9 dadurch, dass die Regelvorsprünge 9 zwar mit unterschiedlichen Abständen 10 und 13, jedoch mit einer vierzähligen Rotationssymmetrie angeordnet sind. Es ergibt sich somit eine ungleichmäßige, jedoch regelmäßige Anordnung von Regelvorsprüngen 9.

Der Abstand 13 misst wenigstens das Vierfache des Abstandes 9.

Die Figuren 12 bis 15 zeigen weitere Varianten von Regelprofilen 8 an der inneren Nutseitenwand 6. Die Ausführungen zu den Figuren 1 bis 11 sind auch auf diese Figuren 12 bis 15 zu lesen. Hierzu wurden die Bezugszeichen übereinstimmend verwendet. Die Regelprofile 8 unterscheiden sich hinsichtlich der Anzahl, der Anordnung und der Größe, insbesondere Breite 13, 14, der Regelprofile 9.

Die Figuren 16 bis 21 zeigen weitere Varianten von Regelprofilen 8 an der äußeren Nutseitenwand 7. Die Ausführungen zu den Figuren 1 bis 15 sind auch auf diese Figuren 16 bis 21 zu lesen. Hierzu wurden die Bezugszeichen übereinstimmend verwendet. Die Regelprofile 8 sind hier durch die radial nach innen von der äußeren Nutseitenwand 7 abragenden Regelvorsprünge 9 gebildet. Zwischen den Regelprofilen 8 und dem Regelkörper 3 ist der Regelspalt 11 ausgebildet, der radial außerhalb des Regelkörpers 3 angeordnet ist und diesen ringförmig einschließt.

Die Regelprofile 8 der Figuren 16 bis 21 unterscheiden sich hinsichtlich der Anzahl, der Anordnung und der Größe, insbesondere Breite 13, 14, der Regelprofile 9.

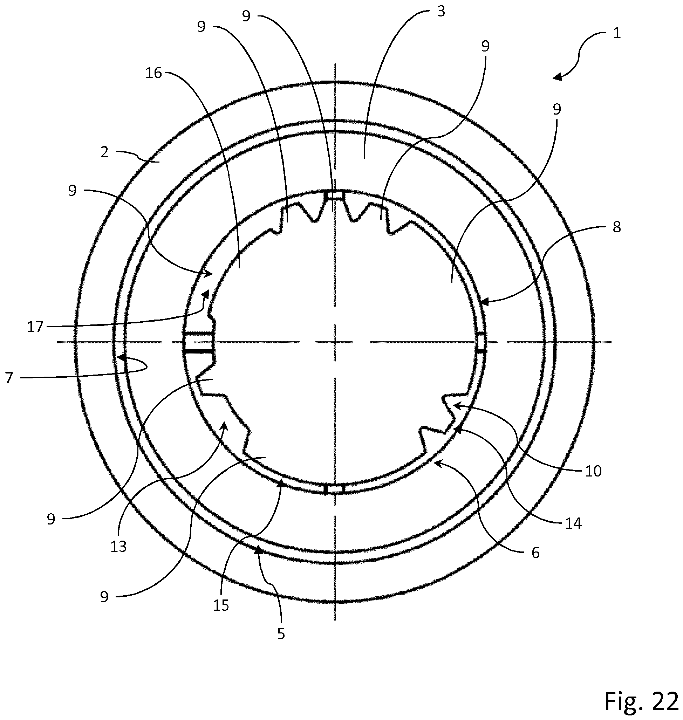

Figur 22 zeigt beispielhaft einen weiteren Durchflussmengenregler 1 mit einem Regelprofil 8. Die Ausführungen zu den Figuren 1 bis 21 sind auch auf diese Figur 22 zu lesen. Hierzu wurden die Bezugszeichen übereinstimmend verwendet.

Das Regelprofil 8 unterscheidet sich von den vorangehend beschriebenen Regelprofilen dadurch, dass ein Regelvorsprung 9 als Zwischenvorsprung 16 ausgebildet ist. Hierzu ist eine Rücknahme 17 an dem Regelvorsprung 9 ausgebildet, welche eine geringere Höhe des Regelvorsprungs 9 bewirkt.

Diese Rücknahme 17 kann an jedem der Regelvorsprünge 9 in den gezeigten Ausführungsbeispielen ausgebildet sein, je nach gewünschtem Regelverhalten. Derartige Zwischenvorsprünge 16 können als Abstützung des deformierten Regelkörpers 3 dienen, um beispielsweise nach einer anfänglich leichten Verformung (also bei geringeren Drücken) einen höheren Widerstand gegen eine weitere Verformung zu entwickeln. Es ergibt sich somit ein unterschiedlicher Beitrag zum Regelverhalten bei niedrigen und hohen Drücken.

Bei weiteren Ausführungsbeispielen sind unterschiedlich große Rücknahmen ausgebildet, so dass mehrere Stufen von unterschiedlich hohen Regelvorsprüngen ausgebildet sind.

Die Aufzählung der gezeigten Varianten sind nicht abschließend zu verstehen; vielmehr ergeben sich weitere Varianten durch Kombination und/oder Variation der gezeigten Varianten, insbesondere hinsichtlich Anzahl, Breite, Höhe, Form und/oder Höhe der Regelvorsprünge. Beispielsweise sind auch radial innerhalb des Regelkörpers 3 ausgebildete Regelprofile 8 mit radial außerhalb des Regelkörpers 3 ausgebildeten Regelprofilen 8 kombinierbar. Es sind so zwei Regelspalten 11 ausbildbar, die ineinander oder nebeneinander liegen können.

Andere Formen des Regelkörpers 3 und/oder der Nut 5, beispielsweise lineare, dreieckige, rechteckige, ovale, zickzackförmige, wellenförmige oder sonstige Verläufe, sind bei weiteren Ausführungsbeispielen realisiert. Auch sind abweichende Querschnittsformen, beispielsweise flache, dreieckige, ovale, mehreckige Querschnittsformen, von der hier gezeigten Ausführung des Regelkörpers 3 als O-Ring realisiert.

Bei einem Durchflussmengenregler 1 mit einem Regelkörper 3 und einem Regelprofil 8, die zwischen sich einen Regelspalt 11 ausbilden, dessen lichte Weite oder Öffnungsquerschnitt druckver-änderlich ist, wird vorgeschlagen, Regelvorsprünge 9 so anzuordnen, dass benachbarte Regelvorsprüngen 9 zwischen sich unterschiedliche Abstände 10, 13 einschließen.

### Bezugszeichenliste

- 1: Durchflussmengenregler
- 2: Gehäuse
- 3: Regelkörper
- 4: Zulaufseite
- 5: Nut
- 6: Nutseitenwand
- 7: Nutseitenwand
- 8: Regelprofil
- 9: Regelvorsprung
- 10: Abstand
- 11: Regelspalt
- 12: Abfolge
- 13: Abstand
- 14: Breite
- 15: Breite
- 16: Zwischenvorsprung
- 17: Rücknahme

## Patentansprüche

1. Durchflussmengenregler (1) mit einem deformierbaren, vorzugsweise ringförmigen, Regelkörper (3), der in eine korrespondierende Nut (5) eingelegt ist, wobei an wenigstens einer Nutseitenwand (6, 7) ein Regelprofil (8) ausgebildet ist, wobei das Regelprofil (8) aus einer Abfolge (12) von Regelvorsprüngen (9) und Regelausnehmungen gebildet ist und der Regelkörper (3) und das Regelprofil (8) zwischen sich einen Regelspalt (11) derart begrenzen, dass eine Formveränderung des Regelkörpers (3) eine Änderung einer Größe des Regelspaltes (11) bewirkt, wobei benachbarte Regelvorsprünge (9) in einem Abstand (10, 13) voneinander angeordnet sind, so dass entlang des Umfangs eine Abfolge (12) von Abständen (10, 13) zwischen jeweils benachbarten Regelvorsprüngen (9) gebildet ist, **dadurch gekennzeichnet, dass** wenigstens drei Abstände (10, 13) in der Abfolge (12) von Abständen (10, 13) voneinander verschieden groß gewählt sind, und dass ein Abstand (10, 13) der wenigstens drei Abstände (10, 13) mehr als doppelt so groß wie ein anderer Abstand (10, 13) der wenigstens drei Abstände (10, 13) ist und dass die Regelvorsprünge (9) eine einheitliche Höhe aufweisen, mit der sie jeweils von der wenigstens einen Nutseitenwand (6, 7) in den Regelspalt (11) abragen.

2. Durchflussmengenregler (1) nach Anspruch 1, **dadurch gekennzeichnet, dass** die Regelvorsprünge (9) in Umfangsrichtung ungleichmäßig verteilt sind.

3. Durchflussmengenregler (1) nach einem der vorangehenden Ansprüche, **dadurch gekennzeichnet, dass** ein Abstand (10, 13) der wenigstens drei Abstände (10, 13) mehr als drei- oder viermal so groß wie ein anderer Abstand (10, 13) der wenigstens drei Abstände (10, 13) ist.

4. Durchflussmengenregler (1) nach einem der vorangehenden Ansprüche, **dadurch gekennzeichnet, dass** die Regelvorsprünge (9) radial nach außen orientiert und/oder radial innerhalb des Regelkörpers (3) angeordnet sind.

5. Durchflussmengenregler (1) nach einem der vorangehenden Ansprüche, **dadurch gekennzeichnet, dass** die Regelvorsprünge (9) radial nach innen orientiert und/oder radial außerhalb des Regelkörpers (3) angeordnet sind.

6. Durchflussmengenregler (1) nach einem der vorangehenden Ansprüche, **dadurch gekennzeichnet, dass** wenigstens zwei Regelvorsprünge (9) in Umfangsrichtung unterschiedliche Breiten aufweisen.

7. Durchflussmengenregler (1) nach einem der vorangehenden Ansprüche, **dadurch gekennzeichnet, dass** die oder eine Höhe, mit der die Regelvorsprünge (9) von der wenigstens einen Nutseitenwand (6, 7) in den Regelspalt (11) abragen, zumindest für einen Teil der Regelvorsprünge (9), bevorzugt für alle Regelvorsprünge (9), verstellbar ist.

8. Durchflussmengenregler (1) nach einem der vorangehenden Ansprüche, **dadurch gekennzeichnet, dass** wenigstens ein Regelvorprung (9) einen Zwischenvorsprung (16) bildet, der in seiner Höhe gegenüber der oder einer Höhe der benachbarten Regelvorsprünge (9) durch eine Rücknahme (17) vermindert ist.

## Claims

1. Flow rate regulator (1) having a deformable, preferably annular, regulating body (3) which is inserted into a corresponding groove (5), wherein a regulating profile (8) is formed on at least one groove side wall (6, 7), wherein the regulating profile (8) is formed from a series (12) of regulating protrusions (9) and regulating clearances, and the regulating body (3) and the regulating profile (8) delimit between them a regulating gap (11) such that a change in shape of the regulating body (3) gives rise to a change in size of the regulating gap (11), wherein adjacent regulating protrusions (9) are arranged at a spacing (10, 13) from one another, and therefore a series (12) of spacings (10, 13) is formed, along the circumference, between respectively adjacent regulating protrusions (9), **characterized in that** at least three spacings (10, 13) in the series (12) of spacings (10, 13) are selected to be of different sizes from one another, and **in that** one spacing (10, 13) of the at least three spacings (10, 13) is more than twice as large as another spacing (10, 13) of the at least three spacings (10, 13), and **in that** the regulating protrusions (9) have a uniform height with which they project in each case from the at least one groove side wall (6, 7) into the regulating gap (11).

2. Flow rate regulator (1) according to Claim 1, **characterized in that** the regulating protrusions (9) are distributed in a non-uniform manner in the circumferential direction.

3. Flow rate regulator (1) according to one of the preceding claims, **characterized in that** one spacing (10, 13) of the at least three spacings (10, 13) is more than three or four times as large as another spacing (10, 13) of the at least three spacings (10, 13).

4. Flow rate regulator (1) according to one of the preceding claims, **characterized in that** the regulating protrusions (9) are oriented radially outward and/or are arranged radially within the regulating body (3).

5. Flow rate regulator (1) according to one of the preceding claims, **characterized in that** the regulating protrusions (9) are oriented radially inward and/or are arranged radially outside the regulating body (3).

6. Flow rate regulator (1) according to one of the preceding claims, **characterized in that** at least two regulating protrusions (9) have different widths in the circumferential direction.

7. Flow rate regulator (1) according to one of the preceding claims, **characterized in that** the or a height with which the regulating protrusions (9) project from the at least one groove side wall (6, 7) into the regulating gap (11) is adjustable at least for some of the regulating protrusions (9), preferably for all of the regulating protrusions (9).

8. Flow rate regulator (1) according to one of the preceding claims, **characterized in that** at least one regulating protrusion (9) forms an intermediate protrusion (16), the height of which is reduced in relation to the height or a height of the adjacent regulating protrusions (9) by way of a recess (17).

## Revendications

1. Régulateur de débit (1) avec un corps de réglage (3) déformable, de préférence annulaire, qui est inséré dans une encoche correspondante (5), dans lequel un profil de réglage (8) est configuré sur au moins une paroi latérale d'encoche (6, 7), dans lequel le profil de réglage (8) est constitué d'une succession (12) de saillies de réglage (9) et de creux de réglage et le corps de réglage (3) et le profil de réglage (8) délimitent entre eux une fente de réglage (11) de telle sorte qu'un changement de forme du corps de réglage (3) entraîne un changement d'une taille de la fente de réglage (11) et dans lequel des saillies de réglage (9) voisines sont disposées à une distance (10, 13) les unes des autres, de telle sorte que le long de la périphérie est formée un succession (12) de distances (10, 13) entre des saillies de réglage (9) voisines, **caractérisé en ce qu'**au moins trois distances (10, 13) sont choisies de tailles différentes dans la succession (12) de distances (10, 13), qu'une distance (10, 13) parmi les au moins trois distances (10, 13) est plus de deux fois plus grande qu'une autre distance (10, 13) parmi les au moins trois distances (10, 13) et que les saillies de réglage (9) présentent une hauteur unifiée dont elles dépassent chacune de l'au moins une paroi latérale d'encoche (6, 7) dans la fente de réglage (11).

2. Régulateur de débit (1) selon la revendication 1, **caractérisé en ce que** les saillies de réglage (9) sont réparties irrégulièrement dans la direction périphérique.

3. Régulateur de débit (1) selon une des revendications précédentes, **caractérisé en ce qu'**une distance (10, 13) parmi les au moins trois distances (10, 13) est plus de trois ou quatre fois plus grande qu'une autre distance (10, 13) parmi les au moins trois distances (10, 13).

4. Régulateur de débit (1) selon une des revendications précédentes, **caractérisé en ce que** les saillies de réglage (9) sont orientées radialement vers l'extérieur et/ou disposées radialement à l'intérieur du corps de réglage (3).

5. Régulateur de débit (1) selon une des revendications précédentes, **caractérisé en ce que** les saillies de réglage (9) sont orientées radialement vers l'intérieur et/ou disposées radialement à l'extérieur du corps de réglage (3).

6. Régulateur de débit (1) selon une des revendications précédentes, **caractérisé en ce qu'**au moins deux saillies de réglage (9) présentent des largeurs différentes dans la direction périphérique.

7. Régulateur de débit (1) selon une des revendications précédentes, **caractérisé en ce que** la ou une hauteur dont les saillies de réglage (9) dépassent de l'au moins une paroi latérale d'encoche (6, 7) dans la fente de réglage (11) est réglable au moins pour une partie des saillies de réglage (9), de préférence pour toutes les saillies de réglage (9).

8. Régulateur de débit (1) selon une des revendications précédentes, **caractérisé en ce qu'**au moins une saillie de réglage (9) forme une saillie intermédiaire (16) dont la hauteur est réduite par rapport à la ou une hauteur des saillies de réglage (9) voisines par un retrait (17).
